(19) Europäisches Patentamt
European Patent Office
Office européen des brevets

(11) **EP 2 555 447 A1**

(12) **EUROPEAN PATENT APPLICATION**
published in accordance with Art. 153(4) EPC

(43) Date of publication:
**06.02.2013 Bulletin 2013/06**

(51) Int Cl.:
***H04B 7/26*** (2006.01)

(21) Application number: **10848699.4**

(22) Date of filing: **02.04.2010**

(86) International application number:
**PCT/CN2010/071553**

(87) International publication number:
**WO 2011/120238 (06.10.2011 Gazette 2011/40)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **Fujitsu Limited
Kawasaki-shi, Kanagawa 211-8588 (JP)**

(72) Inventors:
• **WANG, Jian
Beijing 100025 (CN)**

• **ZHOU, Hua
Beijing 100025 (CN)**
• **WU, Jianming
Beijing 100025 (CN)**

(74) Representative: **Stebbing, Timothy Charles
Haseltine Lake LLP
300 High Holborn
London WC1V 7JH (GB)**

(54) **METHOD FOR SENDING UPLINK SOUNDING REFERENCE SIGNAL, METHOD FOR ESTIMATING CHANNEL, MOBILE TERMINAL, BASE STATION AND WIRELESS COMMUNICATION SYSTEM**

(57) A method for sending an uplink sounding reference signal (SRS), a method for estimating a channel, a mobile terminal and a base station are provided. The method for sending the uplink SRS includes: processing the uplink SRS with masks to obtain a plurality of uplink SRSs processed by the masks; sending the plurality of uplink SRSs processed by the masks on each of numerous time slots distributed to reference signals. The technical solution is able to improve the capacity of the SRS.

S402 — process the uplink sounding reference signal with cover codes to obtain a plurality of covered uplink sounding reference signals

S404 — send the plurality of covered uplink sounding reference signals respectively in a plurality of timeslots allocated to reference signals

**FIG. 4**

EP 2 555 447 A1

**Description**

**Field of the Invention**

The present invention relates to the field of wireless communication systems and in particular to a method for sending an uplink Sounding Reference Signal (SRS), a method for estimating a channel, a mobile terminal, a base station and a wireless communication system.

**Background of the Invention**

In a fourth-generation (4G) mobile communication system, data demodulation and channel sounding is performed with a Reference Signal (RS), for example, in the uplink of Long Term Evolution (LTE) Single Carrier-Frequency Division Multiplex Address (SC-FDMA).

Functions of an uplink RS include channel estimation required for coherent demodulation, channel quality sounding for uplink scheduling, power control, timing estimation, direction-of-arrival estimation to support downlink beam shaping, etc.

The majority of uplink reference signals in the LTE are based a Zadoff-Chu (ZC) sequence which is also referred to as a Generalized Chirp-Like (GCL) sequence. This sequence is typically a non-binary unitary amplitude sequence with the characteristic of Constant Amplitude Zero Autocorrelation (CAZAC). The CAZAC sequence is a complex-valued signal in the form of $e^{j\alpha k}$. A ZC sequence with the length of a prime number $N_{ZC}$ can be represented as:

$$a_q = \exp\left[ -j2\pi q \frac{n(n+1)/2 + ln}{N_{ZC}} \right]$$

Where $q \in \{1, \cdots, N_{ZC}\text{-}1\}$ is a root index of the ZC sequence, $n = 0, 1, \cdots, N_{ZC}\text{-}1$, and $l \in N$. For simplicity, $l$ is set to 0 in the LTE.

The ZC sequence has the following characteristics:

1. The ZC sequence has constant amplitude, and this holds true even after DFT operations. The characteristic of constant amplitude restricts a peak to average power ratio and boundary and temporally flat interference caused to other users. Furthermore, this characteristic also simplifies an implementation when it is only necessary to calculate and store a phase but not amplitude.

2. The ZC sequence with any length has ideal cyclic autocorrelation, that is, cyclic shift correlation is a δ-functions.

An uplink RS has good characteristics due to the ideal characteristic of the ZC sequence: (1) constant amplitude in the frequency domain for the same excitation of all allocated sub-carriers in unbiased channel estimation; (2) a low Cubic Metric (CM) value in the time domain; (3) very good autocorrelation facilitating precise channel estimation; (4) good cross-correlation for reduced interference of an RS sent from other cells over the same resource.

Two types of RSs are supported in the uplink: (1) a Demodulation RS (DM-RS) generally used for channel estimation of uplink data transmission or signaling information transmission and further relevant detection; (2) a Sounding RS (SRS) generally used for channel quality measurement and further frequency selective scheduling in the uplink.

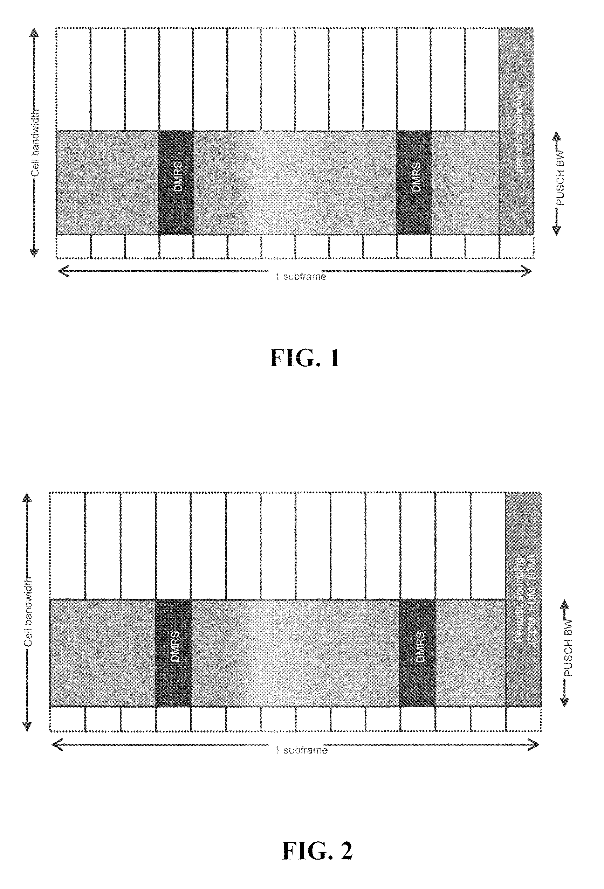

In an LTE system, a sub-frame includes 14 symbols numbered 0, 2, 1, ..., 13 respectively, as illustrated in Fig. 1. In a Rel.8/9 system, an SRS signal of a user can be transmitted only in the no. 13 symbol. In the Rel.8/9 system, a DMRS signal of a user can be transmitted only in the no.3 symbol and the no. 10 symbol. A DMRS and an SRS in the uplink are time-division multiplexed with a data symbol. A DMRS of a given User Equipment (UE) has the same bandwidth as an uplink data channel (PUSCH) or an uplink signaling channel (PUCCH) sent from the user, e.g., a PUSCH bandwidth in the entire cell bandwidth. Therefore, DMRSs of different users are also orthogonal to each other when different bandwidths of the system are allocated to the respective users (FDMA).

An SRS bandwidth of a user can be different from a bandwidth for data transmission. An SRS signal of a user is usually sent in the last SC-FDMA symbol of a sub-frame, and parameters of the SRS signal are signaled in upper-layer signaling of the system. In Fig.1, a UE (mobile terminal) sends an SRS periodically in the last symbol of a sub-frame. In Fig.2, SRS signals of respective UEs are multiplexed through Frequency Division Multiplexing (FDM), Code Division Multiplexing (CDM) or Time Division Multiplexing (TDM). In the TDM mode, an eNodeB (base station) in the LTE requires transmission of a single SRS from a UE or configures the UE to send an SRS periodically to the end. If a UE sends an SRS periodically, then this period can be 2, 5, 10, 20, 40, 80, 160 or 320ms. In the FDM mode, the eNodeB can allocate frequency resources with different bandwidths or frequency resources with the same bandwidth but at different locations to users for transmission of an SRS signal. Factors influencing an SRS bandwidth include the maximum power of a UE, the number of sounding-enabled UEs and a sounding bandwidth required for benefiting from uplink scheduling dependent upon a channel condition. In the CDM mode, the eNodeB can also allocate frequency resources with the same bandwidth at the same location to different users. At this time, different cyclic shifts of an RS sequence can make the sequences be orthogonal, that is, there is zero correlation between a ZC sequence and any cyclic shift of the same sequence. With a channel impulse response with a limited length, different transmitters can use different cyclic temporal shifts of the same RS base sequence, and orthogonality can remain between the RSs as long as the cyclic shifts are longer than the channel impulse response.

No other measure than the foregoing TDM, FDM and CDM can be taken in the existing LTE system to multiplex SRS resources.

In the LTE system, transmission of an uplink signal of a user is supported in a single-antenna transmission or antenna-selective transmission mode. SRS resources can be allocated simply by allocating only a set of SRS resources for each user.

In an LTE-Advanced system, in order to satisfy a higher uplink transmission rate index, a UE is required to support transmission at a higher rank in the uplink, e.g., transmission at the rank 1 to the rank 4, and thus the UE is required to be equipped with a higher number of antennas, e.g., 2 antennas to support transmission at the highest rank of 2 or 4 antennas to support transmission at the highest rank of 4.

When the UE is equipped with a higher number of antennas for transmission at a higher rank, also a larger number of SRS resources have to be allocated thereto for sounding and estimation of a channel of each antenna.

However, a TDM multiplex coefficient, an FDM multiplex coefficient and a CDM multiplex coefficient can not be extended infinitely in the system due to the properties of attenuation in the time domain and attenuation in the frequency domain of a channel. Particularly for the FDM and CDM modes, backward compatibility of the LTE-Advanced system, that is, compatibility for normal use of the LTE-Advanced system by an LTE user, has to be ensured, so the CDM and FDM multiplex coefficients can not be extended at will in the LTE-Advanced system.

Therefore an SRS capacity has to be further improved in a further method.

Summary of the Invention

In order to address the foregoing technical problem, according to an aspect of the invention, there is provided a method for sending an uplink sounding reference signal, which includes: processing the uplink sounding reference signal with cover codes to obtain a plurality of covered uplink sounding reference signals; and sending the plurality of covered uplink sounding reference signals respectively in a plurality of timeslots allocated to reference signals.

Optionally the plurality of timeslots allocated to the reference signals include timeslots allocated to uplink sounding reference signals and/or timeslots allocated to demodulation reference signals.

Optionally the plurality of timeslots allocated to the reference signals include timeslots allocated to two demodulation reference signals in the same sub-frame or timeslots allocated to two demodulation reference signals in different sub-frames or timeslots allocated to two uplink sounding reference signals in different sub-frames or a timeslot allocated to an uplink sounding reference signal and a timeslot allocated to one demodulation reference signal of the same sub-frame or a timeslot allocated to an uplink sounding reference signal and a timeslot allocated to one demodulation reference signal of different sub-frames.

Optionally processing the uplink sounding reference signal with the cover codes includes multiplying the uplink sounding reference signal respectively by a plurality of cover code constants to obtain the plurality of covered uplink sounding reference signals.

Optionally, the plurality of cover code constants include 1 and -1 or 1 and 1 or j and -j or j and j.

According to another aspect of the invention, there is provided a method for estimating a channel using an uplink sounding reference signal, which includes: receiving a plurality of signals including covered uplink sounding reference signals sent respectively in a plurality of timeslots allocated to reference signals; and de-covering the received signals to obtain estimation of the channel.

Optionally the plurality of timeslots allocated to the reference signals include timeslots allocated to uplink sounding reference signals and/or timeslots allocated to demodulation reference signals.

Optionally the plurality of timeslots allocated to the reference signals include timeslots allocated to two demodulation reference signals in the same sub-frame or timeslots allocated to two demodulation reference signals in different sub-frames or timeslots allocated to two uplink sounding reference signals in different sub-frames or a timeslot allocated to an uplink sounding reference signal and a timeslot allocated to one demodulation reference signal of the same sub-frame or a timeslot allocated to an uplink sounding reference signal and a timeslot allocated to one demodulation reference signal of different sub-frames.

Optionally the plurality of covered uplink sounding reference signals are obtained by multiplying the uplink sounding reference signal respectively by a plurality of cover code constants.

Optionally the plurality of cover code constants include 1 and -1 or 1 and 1 or j and -j or j and j.

According to a further aspect of the invention, there is provided a mobile terminal including: a covering unit configured to process an uplink sounding reference signal with cover codes to obtain a plurality of covered uplink sounding reference signals; and a sending unit configured to send the plurality of covered uplink sounding reference signals respectively in a plurality of timeslots allocated to reference signals.

Optionally the plurality of timeslots allocated to the reference signals include timeslots allocated to uplink sounding reference signals and/or timeslots allocated to demodulation reference signals.

Optionally the plurality of timeslots allocated to the reference signals include timeslots allocated to two demodulation reference signals in the same sub-frame or timeslots allocated to two demodulation reference signals in different sub-frames or timeslots allocated to two uplink sounding reference signals in different sub-frames or a timeslot allocated to an uplink sounding reference signal and a timeslot allocated to one demodulation reference signal of the same sub-frame or a timeslot allocated to an uplink sounding reference signal and a timeslot allocated to one demodulation reference signal of different sub-frames.

Optionally the covering unit multiplies the uplink sounding reference signal respectively by a plurality of cover code constants to obtain the plurality of covered uplink sounding reference signals.

Optionally the plurality of cover code constants include 1 and -1 or 1 and 1 or j and -j or j and j.

According to still another aspect of the invention, there is provided a base station including: a receiving unit configured to receive a plurality of signals including covered uplink sounding reference signals sent respectively in a plurality of timeslots allocated to reference signals; and a de-covering unit configured to de-cover the received signals to obtain estimation of a channel.

Optionally the plurality of timeslots allocated to the reference signals include timeslots allocated to uplink sounding reference signals and/or timeslots allocated to demodulation reference signals.

Optionally the plurality of timeslots allocated to the reference signals include timeslots allocated to two demodulation reference signals in the same sub-frame or timeslots allocated to two demodulation reference signals in different sub-frames or timeslots allocated to two uplink sounding reference signals in different sub-frames or a timeslot allocated to an uplink sounding reference signal and a timeslot allocated to one demodulation reference signal of the same sub-frame or a timeslot allocated to an uplink sounding reference signal and a timeslot allocated to one demodulation reference signal of different sub-frames.

Optionally the plurality of covered uplink sounding reference signals are obtained by multiplying the uplink sounding reference signal respectively by a plurality of cover code constants.

Optionally the plurality of cover code constants include 1 and -1 or 1 and 1 or j and -j or j and j.

Furthermore the invention further provides a wireless communication system including the mobile terminal according to the invention and the base station according to the invention as described above;

The invention can improve effectively the capacity of uplink sounding reference signals.

These and further aspects and features of the invention will become more apparent from the following description and the drawings. In the description and the drawings, specific embodiments of the invention have been disclosed in details, and numerous ways in which the principle of the invention can be embodied have been indicated. It shall be noted that the scope of the invention will not be limited thereto. The invention is intended to encompass various variations, modifications and equivalents without departing from the spirit and the scope of the appended claims.

A feature described and/or illustrated with respect to one embodiment can be used in one or more other embodiments in the same or similar way in combination or in place of a feature in the other embodiment(s).

It shall be emphasized that the term "include/comprise" as used in this context refers to presence of a feature, an integer, a step or a component but will not preclude presence or addition of one or more other features, integers, steps or components.

Numerous aspects of the invention will be better understood with reference to the drawings. Components in the drawings are not drawn to scale but merely intended to illustrate the principle of the invention. In order to facilitate illustration and description of some parts of the invention, corresponding parts in the drawings may be magnified, that is, they become larger than other components in an illustrative apparatus manufactured in practice according to the invention. An element and a feature described in a drawing or an embodiment of the invention can be combined with an element and a feature illustrated in one or more other drawings or embodiments. Furthermore like reference numerals in the drawings represent corresponding components in several drawings and can indicate corresponding components used in more than one embodiment.

**Brief Description of the Drawings**

Preferred embodiments of the invention have been illustrated in the drawings which constitute a part of the specification and serve to further elucidate together with the description the principle of the invention in details and in which:

Fig.1 illustrates a schematic diagram of a sub-frame in which an uplink SRS is sent in the prior art;

Fig.2 illustrates a schematic diagram of another sub-frame in which an uplink SRS is sent in the prior art;

Fig.3 illustrates a schematic diagram of a sub-frame in which an uplink SRS is sent according to an embodiment of the invention;

Fig.4 illustrates a flow chart of a method for sending an uplink SRS according to an embodiment of the invention;

Fig.5 illustrates a flow chart of a method for estimating a channel using an uplink SRS according to an embodiment of the invention;

Fig.6 illustrates a block diagram of a mobile terminal according to an embodiment of the invention;

Fig.7 illustrates a block diagram of a base station according to an embodiment of the invention; and

Fig.8 illustrates a block diagram of a wireless communication system according to an embodiment of the invention.

## Detailed Description of the Invention

The invention will be described below in details with reference to the drawings, and it shall be noted that embodiments described later are merely intended to facilitate understanding of the invention but not to limit the invention in any way.

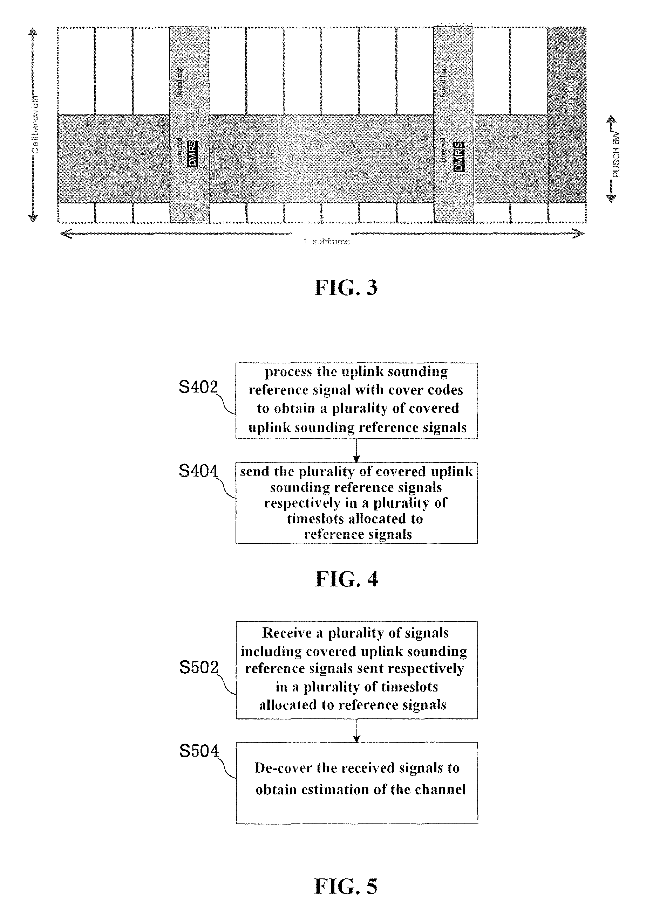

Fig.4 illustrates a flow chart of a method for sending an uplink Sounding Reference Signal (SRS) according to an embodiment of the invention. In the step S402, the uplink sounding reference signal is processed with cover codes to obtain a plurality of covered uplink sounding reference signals. In the step 404, the plurality of covered uplink sounding reference signals are sent respectively in a plurality of timeslots allocated to reference signals.

There are various reference signals in a mobile communication system. These reference signals are known to a receiver and typically used for channel estimation, power control, etc., for example, an SRS, a Demodulation Reference Signal (DMRS), etc., in an LTE system. In an embodiment of the invention, a plurality of versions obtained by covering an uplink SRS are sent in timeslots allocated to the reference signals, that is, multiplexed with other reference signals (or SRS signals of other users), thereby further improving the capacity of SRSs. The reference signal as mentioned here will not be limited to an SRS and a DMRS but can also be another reference signal known to a receiver.

The following description will be given taking an LTE system as an example. Fig.3 illustrates a schematic diagram of a sub-frame in which an uplink SRS is sent according to an embodiment of the invention. In the LTE system, a sub-frame includes 14 symbols in total, which are numbered 0, 2, 1, ..., 13 respectively. In a Rel.8/9 system, an SRS signal of a user can be transmitted only in the no. 13 symbol. In the Rel.8/9 system, a DMRS signal of a user can be transmitted only in the no.3 symbol and the no. 10 symbol. In Fig.3, two covered uplink SRS signals ("covered sounding" denoted in the figure) are multiplexed with a DMRS signal. It shall be noted the covered uplink SRS signals can be of an equal bandwidth to that of the DMRS signal, can be of a larger bandwidth than that of the DMRS signal or can be of a smaller bandwidth than that of the DMRS signal. The covered uplink SRS signals can be periodical signals or non-periodical signals.

Assumed a UE1 is scheduled by the system to transmit an SRS signal with a length of $L_{ue1}$ including symbols in the frequency domain $s_0$, $s_1$, ..., $s_L$ with a wave form in the time domain $S_{UE1}(t)$. In the step 402, the SRS signal is processed with cover codes to obtain a plurality of covered uplink SRS signals. For example, the SRS signal $S_{UE1}(t)$ can be multiplied by 1 and -1 respectively to obtain $S_{UE1}(t)$ and $-S_{UE1}(t)$, i.e., two covered SRS signals. Particularly the signal $-S_{UE1}(t)$ corresponds to symbols in the frequency domain $-s_0$, $-s_1$, ..., $-s_L$ due to the characteristic of the SRS signal. In the step 404, the signals $S_{UE1}(T)$ and $-S_{UE1}(t)$ are sent respectively in timeslots allocated to two DMRS signals in the same sub-frame, that is, $S_{UE1}(t)$ is sent in the no.3 symbol and $-S_{UE1}(t)$ is sent in the no. 10 symbol. At this time DMRS signals sent from the UE1 or other UEs may be present in the no.3 symbol and the no.10 symbol, and at this time the covered SRS signals and the DMRS signals are multiplexed together. A receiver (base station) can perform de-covering on the signals received in the no.3 symbol and the no.10 symbol to obtain channel estimation. A specific de-covering method will be introduced below in details.

In the foregoing example, the covered SRS signals are sent in the timeslots allocated to two DRMS signals in the same sub-frame. However the invention will not be limited thereto. For example, the covered SRS signals can alternatively be transmitted in timeslots allocated to two DMRS signals in different sub-frames or timeslots allocated to two SRS signals in different sub-frames or a timeslot allocated to an SRS signal and a timeslot allocated to one DMRS signal of the same sub-frame or a timeslot allocated to an SRS signal and a timeslot allocated to one DMRS signal of different sub-frames.

In the foregoing example, the SRS signal is multiplied respectively by 1 and -1 to obtain two covered SRS signals. However the invention will not be limited thereto. Alternatively the SRS signal can be multiplied by 1 and 1 or j and -j or j and j or any other two constants (referred here to as cover code constants) to obtain two covered SRS signals. Here there is a lower effort of calculation when the SRS signal is multiplied respectively by 1 and 1 or j and -j or j and j to obtain two covered SRS signals.

Furthermore two covered SRS signals are obtained in the foregoing example, but the invention will not be limited thereto. Alternatively a larger number, e.g. 3 or 4, of covered SRS signals can be obtained. For example, the SRS signal can be multiplied respectively by 1, -1 and j to obtain three covered SRS signals. These three covered SRS signals can be sent in two DMRS timeslots and one SRS timeslot of the same sub-frame or DMRS timeslots or SRS timeslots of different sub-frames. Those skilled in the art can conceive various combination schemes which will not be described here in details.

When the plurality of covered SRS signals are sent in different timeslots of the same sub-frame, the same channel condition can be assumed due to a small transmission interval of time therebetween to thereby further facilitate channel estimation.

In the foregoing example, only one SRS signal is covered. However embodiments of the invention will not be limited thereto. For example a plurality of CDM and/or FDM-multiplexed SRS signals can be covered in an embodiment of the invention. For example, the multiplexed SRS signals can be multiplied respectively by 1 and -1 to obtain two covered multiplexed SRS signals.

Fig.5 illustrates a flow chart of a method for estimating a channel using an uplink SRS according to an embodiment of the invention.

In the Fig.5, a plurality of signals including covered uplink sounding reference signals sent respectively in a plurality of timeslots allocated to reference signals are received in the step S502. In the step S504, the received signals are de-covered to obtain estimation of the channel.

The reference signals in this embodiment can be SRSs and DMRSs or other reference signals known to a receiver.

In an example, the plurality of timeslots allocated to the reference signals include timeslots allocated to SRS signals and/or timeslots allocated to DMRS signals. More particularly the plurality of timeslots allocated to the reference signals include timeslots allocated to two DRMS signals in the same sub-frame or timeslots allocated to two DMRS signals in different sub-frames or timeslots allocated to two SRS signals in different sub-frames or a timeslot allocated to an SRS signal and a timeslot allocated to one DMRS signal of the same sub-frame or a timeslot allocated to an SRS signal and a timeslot allocated to one DMRS signal of different sub-frames.

The following description will be given taking an LTE system as an example. Fig.3 illustrates a schematic diagram of a sub-frame in which an uplink SRS is sent according to an embodiment of the invention. A sub-frame of the LTE system includes 14 symbols in total, which are numbered 0, 2, 1, ..., 13 respectively. In a Rel.8/9 system, an SRS signal of a user can be transmitted only in the no.13 symbol. In the Rel.8/9 system, a DMRS signal of a user can be transmitted only in the no.3 symbol and the no.10 symbol.

Assumed a UE1 is scheduled by the system to transmit an SRS signal with a length of $L_{ue1}$ including symbols in the frequency domain $s_0$, $s_1$, ..., $s_L$ with a wave form in the time domain $S_{UE1}(t)$. A plurality of covered uplink SRS signals are $S_{UE1}(t)$ and $-S_{UE1}(t)$. The signals $S_{UE1}(t)$ and $-S_{UE1}(t)$ are sent respectively in timeslots allocated to two DMRS signals in the same sub-frame, that is, $S_{UE1}(t)$ is transmitted in the no.3 symbol and $-S_{UE1}(t)$ is transmitted in the no. 10 symbol.

In the step S502, a plurality of signals including covered uplink sounding reference signals sent respectively in a plurality of timeslots allocated to reference signals are received. At a receiver (base station), assumed the covered SRS signals sent from the UE1 overlap with DMRS signals sent from a UE2, and for an overlapped sub-carrier f1, assumed the UE1 sends the SRS signal $S_{UE1}$ and the UE2 sends the DMRS signals of $S_{UE2,3}$ and $S_{UE2,10}$ corresponding respectively to the no.3 symbol and the no.10 symbol over this sub-carrier.

Then for the no.3 symbol, the receiver receives the following signal over the sub-carrier f1:

$$Y_3 = h_{1,3} * S_{UE1} + h_{2,3} * S_{UE2,3} + n_3;$$

and

Then for the no.10 symbol, the receiver receives the following signal over the sub-carrier f1:

$$Y_{10} = -h_{1,10} * S_{UE1} + h_{2,10} * S_{UE2,10} + n_{10},$$

Where $h_{1,3}$ is a channel value of the UE1 at the no.3 symbol, and $h_{2,3}$ is a channel value of the UE2 at the no. 3 symbol; and wherein $h_{1,10}$ is a channel value of the UE1 at the no.10 symbol, and $h_{2,10}$ is a channel value of the UE2 at the no.10 symbol; and $n_3$ and $n_{10}$ are noise of the receiver over the sub-carrier f1 at the no.3 symbol and at the no.

10 symbol respectively.

In the step S504, the received signals are de-covered to obtain estimation of the channel. In the case that the UEs move slowly, we can deem that the channel values of each UE are approximately equal at the no.3 symbol and no. 10 symbol, that is, $h_{1,3}=h_{1,10}$, and further represented as $h_1$. Alike $h_{2,3}=h_{2,10}$, and they are further represented as $h_2$. As can be apparent from the foregoing analysis, a channel estimation value of the UE2 is:

$$H_2{}'= (Y_3+ Y_{10})/( S_{UE2,3}+ S_{UE2,10});$$

and

A channel estimation value of the UE1 is:

$$H_1{}'= (Y_3- Y_{10}- H_2{}'*( S_{UE2,3}- S_{UE2,10}))/( 2*S_{UE1}).$$

Channel estimation of the UE2 and the UE1 has been finished so far.

As can be apparent, since the SRS signals and/or the DMRS signals sent from the UEs are known to the base station, channel estimation of the UEs can be obtained by solving a set of simultaneous linear equations with two unknowns taking the channel estimation of the respective UEs as the unknowns and the sent signals and received signals as known numbers.

In the foregoing example, if the SRS signal sent from the UE1 overlaps with DMRS signals ($S_{UE1,3}$ and $S_{UE1,10}$) of the UE1 itself, then for the no.3 symbol, the receiver receives the following signal over the sub-carrier f1:

$$Y_3=h_{1,3}* S_{UE1}+h_{1,3}* S_{UE1,3}+n_3;$$

and

Then for the no. 10 symbol, the receiver receives the following signal over the sub-carrier f1:

$$Y_{10}=-h_{1,10}* S_{UE1}+h_{1,10}* S_{UE1,10}+n_{10}.$$

Thus channel values of the UE1 at the no.3 symbol and the no.10 symbol can be derived respectively. If the two values are deemed to be approximately equal, then a channel value of the UE1 can be calculated in either of the equations or derived by averaging the channel values at the no.3 symbol and the no.10 symbol.

Channel estimation has been performed above only for the sub-carrier f1. A similar process flow applies to other sub-carriers. Noted a covered SRS can overlap with a DMRS signal of at most one UE over the same sub-carrier.

In the foregoing example, the SRS signal is multiplied respectively by 1 and -1 to obtain two covered SRS signals. However the invention will not be limited thereto. Alternatively the SRS signal can be multiplied by 1 and 1 or j and -j or j and j or any other two constants (referred here to as cover code constants) to obtain two covered SRS signals. As can be apparent from the foregoing example, those skilled in the art can readily know how to obtain channel estimation through a de-covering process in the event of multiplying the SRS signal respectively by other constants. Here there is a lower effort of calculation when the SRS signal is multiplied respectively by 1 and 1 or j and -j or j and j to obtain two covered SRS signals.

Furthermore two covered SRS signals are obtained in the foregoing example, but the invention will not be limited thereto. Alternatively a larger number, e.g. 3 or 4, of masked SRS signals can be obtained. For example, the SRS signal can be multiplied respectively by 1, -1 and j to obtain three covered SRS signals. These three covered SRS signals can be sent in two DMRS timeslots and one SRS timeslot of the same sub-frame or DMRS timeslots or SRS timeslots of different sub-frames. Those skilled in the art can conceive various combination schemes which will not be described here in details.

When the plurality of covered SRS signals are sent in different timeslots of the same sub-frame, the same channel condition can be assumed due to a small transmission interval of time therebetween to thereby further facilitate channel estimation.

In an example, the number of required covered SRSs can be determined from the number of channels required to be estimated. For example, when the plurality of covered SRS signals are sent respectively in a first sub-frame and a second sub-frame, if the channel varies so rapidly that the channel of the same UE over the different sub-frames can not be deemed to be the same and the SRS signal sent from the UE1 overlaps with the DMRS signal of the UE2 over the first sub-frame and the SRS signal sent from the UE1 overlaps with the DMRS signal of the UE3 over the second sub-frame, then there are 4 items of channel estimation to be calculated, that is, channel estimation of the UE1 over the first sub-frame, channel estimation of the UE1 over the second sub-frame, channel estimation of the UE2 over the first sub-frame and channel estimation of the UE3 over the second sub-frame, and at this time the number of required covered SRS signals is also 4, that is, 4 equations are required to derive 4 unknowns. Thus 4 covered SRS signals can be sent in 4 DMRS timeslots in total of the first sub-frame and the second sub-frame to thereby obtain 4 equations and further derive the foregoing four items of channel estimation.

In the foregoing example, only one SRS signal is covered. However embodiments of the invention will not be limited thereto. For example a plurality of CDM- and/or FDM-multiplexed SRS signals can be covered in an embodiment of the invention. For example, the multiplexed SRS signals can be multiplied respectively by 1 and -1 to obtain two covered multiplexed SRS signals. In this case, the base station side firstly combines the received covered multiplexed SRS signals into an unknown and can derive channel estimation of a UE sending a reference signal overlapping therewith and the combination of the received covered multiplexed SRS signals by solving a set of simultaneous equations as described above and then derives channel estimation corresponding to the respective SRS signals for the combination in various ways known to those skilled in the art.

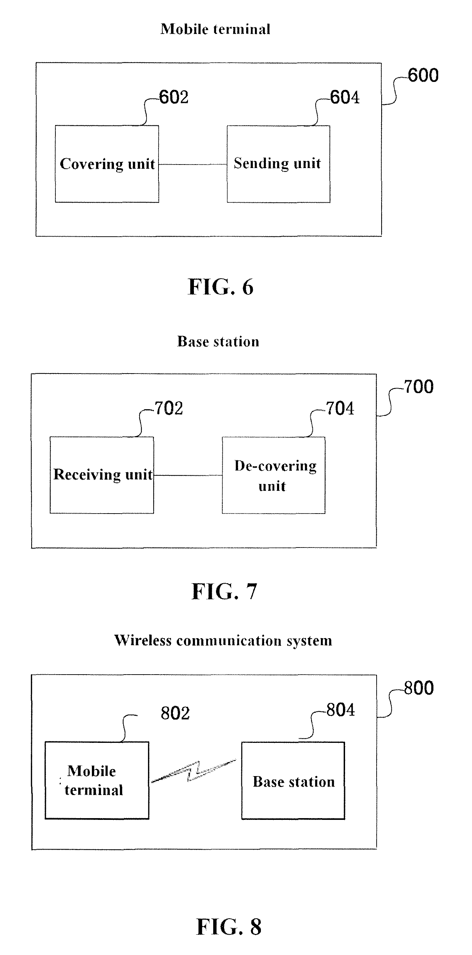

Fig.6 illustrates a block diagram of a mobile terminal 600 according to an embodiment of the invention. The mobile terminal 600 includes: a covering unit 602 configured to process an uplink sounding reference signal with cover codes to obtain a plurality of covered uplink sounding reference signals; and a sending unit 604 configured to send the plurality of covered uplink sounding reference signals respectively in a plurality of timeslots allocated to reference signals.

Optionally the plurality of timeslots allocated to the reference signals include timeslots allocated to uplink sounding reference signals and/or timeslots allocated to demodulation reference signals.

Optionally the plurality of timeslots allocated to the reference signals include timeslots allocated to two demodulation reference signals in the same sub-frame or timeslots allocated to two demodulation reference signals in different sub-frames or timeslots allocated to two uplink sounding reference signals in different sub-frames or a timeslot allocated to an uplink sounding reference signal and a timeslot allocated to one demodulation reference signal of the same sub-frame or a timeslot allocated to an uplink sounding reference signal and a timeslot allocated to one demodulation reference signal of different sub-frames.

Optionally the covering unit multiplies the uplink sounding reference signal respectively by a plurality of cover code constants to obtain the plurality of covered uplink sounding reference signals.

Optionally the plurality of cover code constants include 1 and -1 or 1 and 1 or j and -j or j and j.

How to embody the functions of the respective components of the mobile terminal illustrated in Fig.6 will become apparent upon review of the foregoing description of the operation process of the method for sending an uplink sounding reference signal according to the embodiment of the invention, so how to embody the functions of the foregoing respective components will not be described here in details for the sake of conciseness of the specification.

Fig.7 illustrates a block diagram of a base station 700 according to an embodiment of the invention. The base station 700 includes: a receiving unit 702 configured to receive a plurality of signals including covered uplink sounding reference signals sent respectively in a plurality of timeslots allocated to reference signals; and a de-covering unit 704 configured to de-cover the received signals to obtain estimation of a channel.

Optionally the plurality of timeslots allocated to the reference signals include timeslots allocated to uplink sounding reference signals and/or timeslots allocated to demodulation reference signals.

Optionally the plurality of timeslots allocated to the reference signals include timeslots allocated to two demodulation reference signals in the same sub-frame or timeslots allocated to two demodulation reference signals in different sub-frames or timeslots allocated to two uplink sounding reference signals in different sub-frames or a timeslot allocated to an uplink sounding reference signal and a timeslot allocated to one demodulation reference signal of the same sub-frame or a timeslot allocated to an uplink sounding reference signal and a timeslot allocated to one demodulation reference signal of different sub-frames.

Optionally the plurality of covered uplink sounding reference signals are obtained by multiplying the uplink sounding reference signal respectively by a plurality of cover code constants.

Optionally the plurality of cover code constants include 1 and -1 or 1 and 1 or j and -j or j and j.

How to embody the functions of the respective components of the base station illustrated in Fig.7 will become apparent upon review of the foregoing description of the operation process of the method for estimating a channel using an uplink sounding reference signal according to the embodiment of the invention, so how to embody the functions of the foregoing respective components will not be described here in details for the sake of conciseness of the specification.

Fig.8 illustrates a block diagram of a wireless communication system 800 according to an embodiment of the invention. The wireless communication system 800 includes a mobile terminal 802 and a base station 804. The mobile terminal 802 and the base station 804 are similar to the mobile terminal 600 and the base station 700 described above. Thus a detailed description thereof will be omitted here for the sake of conciseness of the specification.

The embodiments of the invention have been introduced above taking an LTE system as an example. However embodiments of the invention will not be limited thereto. Those skilled in the art would readily appreciate upon review of the foregoing disclosure that the invention can also be applicable to WiMax and other communication systems in which a similar uplink sounding reference signal is required to be sent.

Those ordinarily skilled in the art can appreciate that all or any of the steps or the components of the inventive methods and apparatuses can be embodied in any computing device (including a processor, a storage medium, etc.) or network of computing devices in hardware, firmware, software or combination thereof, and this can be realized by those ordinarily skilled in the art upon review of the description of the invention in conjunction with their basic programming skills, so a detailed description thereof will be omitted here.

Thus based upon the foregoing understanding, the object of the invention can also be attained by running a program or a set of programs on any information processing device which can be a well-known general-purpose device. Thus the object of the invention can also be attained by providing only a program product containing program codes to embody the methods or the apparatuses. Stated otherwise, such a program product also constitutes the invention, and a storage medium in which such a program product is stored also constitutes the invention. Apparently the storage medium can be any well-known storage medium or any storage medium to be developed in the future, so it is not necessary to enumerate various storage mediums here.

In the methods and apparatuses of the invention, the respective components or the respective steps apparently can be decomposed, combined and/or decomposed and then recombined. These decomposition, combination and/or recombination shall be regarded as equivalents of the invention.

The preferred embodiments of the invention have been described above. Those ordinarily skilled in the art can appreciate that the scope of the invention will not be limited to the specific details disclosed here but can be susceptible to various variations and equivalents coming into the spirit and scope of the invention.

**Claims**

1. A method for sending an Uplink Sounding Reference Signal (SRS), comprising:

    processing the uplink sounding reference signal with cover codes to obtain a plurality of covered uplink sounding reference signals; and
    sending the plurality of covered uplink sounding reference signals respectively in a plurality of timeslots allocated to reference signals.

2. The method of claim 1, wherein the plurality of timeslots allocated to the reference signals comprise timeslots allocated to uplink sounding reference signals and/or timeslots allocated to demodulation reference signals.

3. The method of claim 2, wherein the plurality of timeslots allocated to the reference signals comprise timeslots allocated to two demodulation reference signals in the same sub-frame or timeslots allocated to two demodulation reference signals in different sub-frames or timeslots allocated to two uplink sounding reference signals in different sub-frames or a timeslot allocated to an uplink sounding reference signal and a timeslot allocated to one demodulation reference signal of the same sub-frame or a timeslot allocated to an uplink sounding reference signal and a timeslot allocated to one demodulation reference signal of different sub-frames.

4. The method of claim 1, wherein processing the uplink sounding reference signal with the cover codes comprises multiplying the uplink sounding reference signal respectively by a plurality of cover code constants to obtain the plurality of covered uplink sounding reference signals.

5. The method of claim 4, wherein the plurality of cover code constants comprise 1 and -1 or 1 and 1 or j and -j or j and j.

6. A method for estimating a channel using an uplink sounding reference signal, comprising:

    receiving a plurality of signals comprising covered uplink sounding reference signals sent respectively in a plurality of timeslots allocated to reference signals; and

de-covering the received signals to obtain estimation of the channel.

7. The method of claim 6, wherein the plurality of timeslots allocated to the reference signals comprise timeslots allocated to uplink sounding reference signals and/or timeslots allocated to demodulation reference signals.

8. The method of claim 7, wherein the plurality of timeslots allocated to the reference signals comprise timeslots allocated to two demodulation reference signals in the same sub-frame or timeslots allocated to two demodulation reference signals in different sub-frames or timeslots allocated to two uplink sounding reference signals in different sub-frames or a timeslot allocated to an uplink sounding reference signal and a timeslot allocated to one demodulation reference signal of the same sub-frame or a timeslot allocated to an uplink sounding reference signal and a timeslot allocated to one demodulation reference signal of different sub-frames.

9. The method of claim 6, wherein the plurality of covered uplink sounding reference signals are obtained by multiplying the uplink sounding reference signal respectively by a plurality of cover code constants.

10. The method of claim 9, wherein the plurality of cover code constants comprise 1 and -1 or 1 and 1 or j and -j or j and j.

11. A mobile terminal, comprising:

a covering unit configured to process an uplink sounding reference signal with cover codes to obtain a plurality of covered uplink sounding reference signals; and

a sending unit configured to send the plurality of covered uplink sounding reference signals respectively in a plurality of timeslots allocated to reference signals.

12. The mobile terminal of claim 11, wherein the plurality of timeslots allocated to the reference signals comprise timeslots allocated to uplink sounding reference signals and/or timeslots allocated to demodulation reference signals.

13. The mobile terminal of claim 12, wherein the plurality of timeslots allocated to the reference signals comprise timeslots allocated to two demodulation reference signals in the same sub-frame or timeslots allocated to two demodulation reference signals in different sub-frames or timeslots allocated to two uplink sounding reference signals in different sub-frames or a timeslot allocated to an uplink sounding reference signal and a timeslot allocated to one demodulation reference signal of the same sub-frame or a timeslot allocated to an uplink sounding reference signal and a timeslot allocated to one demodulation reference signal of different sub-frames.

14. The mobile terminal of claim 11, wherein the covering unit multiplies the uplink sounding reference signal respectively by a plurality of cover code constants to obtain the plurality of covered uplink sounding reference signals.

15. The mobile terminal of claim 14, wherein the plurality of cover code constants comprise 1 and -1 or 1 and 1 or j and -j or j and j.

16. A base station, comprising:

a receiving unit configured to receive a plurality of signals comprising covered uplink sounding reference signals sent respectively in a plurality of timeslots allocated to reference signals; and

a de-covering unit configured to de-cover the received signals to obtain estimation of a channel.

17. The base station of claim 16, wherein the plurality of timeslots allocated to the reference signals comprise timeslots allocated to uplink sounding reference signals and/or timeslots allocated to demodulation reference signals.

18. The base station of claim 17, wherein the plurality of timeslots allocated to the reference signals comprise timeslots allocated to two demodulation reference signals in the same sub-frame or timeslots allocated to two demodulation reference signals in different sub-frames or timeslots allocated to two uplink sounding reference signals in different sub-frames or a timeslot allocated to an uplink sounding reference signal and a timeslot allocated to one demodulation reference signal of the same sub-frame or a timeslot allocated to an uplink sounding reference signal and a timeslot allocated to one demodulation reference signal of different sub-frames.

19. The base station of claim 16, wherein the plurality of covered uplink sounding reference signals are obtained by multiplying the uplink sounding reference signal respectively by a plurality of cover code constants.

20. The base station of claim 19, wherein the plurality of cover code contants comprise 1 and -1 or 1 and 1 or j and -j or j and j.

21. A wireless communication system, comprising the mobile terminal according to any one of claims 11 to 15 and the base station according to any one of the claims 16 to 20.

**FIG. 1**

**FIG. 2**

FIG. 3

S402 — process the uplink sounding reference signal with cover codes to obtain a plurality of covered uplink sounding reference signals

↓

S404 — send the plurality of covered uplink sounding reference signals respectively in a plurality of timeslots allocated to reference signals

FIG. 4

S502 — Receive a plurality of signals including covered uplink sounding reference signals sent respectively in a plurality of timeslots allocated to reference signals

↓

S504 — De-cover the received signals to obtain estimation of the channel

FIG. 5

Mobile terminal

FIG. 6

Base station

FIG. 7

Wireless communication system

FIG. 8

# INTERNATIONAL SEARCH REPORT

| International application No. |
| --- |
| PCT/CN2010/071553 |

**A. CLASSIFICATION OF SUBJECT MATTER**

H04B 7/26 (2006.01) i

According to International Patent Classification (IPC) or to both national classification and IPC

**B. FIELDS SEARCHED**

Minimum documentation searched (classification system followed by classification symbols)

IPC: H04B 7/-

Documentation searched other than minimum documentation to the extent that such documents are included in the fields searched

Electronic data base consulted during the international search (name of data base and, where practicable, search terms used)

Database: WPI; EPODOC; CNPAT; CNKI

Search terms: detect, mask, signal, reference, time slot

**C. DOCUMENTS CONSIDERED TO BE RELEVANT**

| Category* | Citation of document, with indication, where appropriate, of the relevant passages | Relevant to claim No. |
| --- | --- | --- |
| A | CN1762109A(SAMSUNG ELECTRONICS CO., LTD) 19 Apr. 2006 (19.04.2006) The whole document | 1-21 |
| A | WO2009011523A(SAMSUNG ELECTRONICS CO., LTD) 22 Jan. 2009 (22.01.2009) The whole document | 1-21 |
| A | CN101682482A(QUALCOMM INC) 24 Mar. 2010 (24.03.2010) The whole document | 1-21 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 20 Dec. 2010 (20.12.2010) | **13 Jan. 2011 (13.01.2011)** |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **WANG, YAN** Telephone No. (86-10)62411625 |

Form PCT/ISA /210 (second sheet) (July 2009)

## INTERNATIONAL SEARCH REPORT
### Information on patent family members

| | International application No. |
|---|---|
| | PCT/CN2010/071553 |

| Patent Documents referred in the Report | Publication Date | Patent Family | Publication Date |
|---|---|---|---|
| CN1762109A | 19.04.2006 | US2005122938A1 | 09.06.2005 |
| | | WO2005055473A1 | 16.06.2005 |
| | | AU2004302226A1 | 01.09.2005 |
| | | BRPI0408545A | 07.03.2006 |
| | | KR20050055575A | 13.06.2005 |
| | | EP1704657A1 | 27.09.2006 |
| | | INKOLNP200501632E | 22.09.2006 |
| | | JP2007515882T | 14.06.2007 |
| | | RU2308808C2 | 20.10.2007 |
| | | JP4220552B2 | 04.02.2009 |
| | | AU2004302226A8 | 11.09.2008 |
| | | CA2519127A | 16.06.2005 |
| | | RU2005129258A | 27.05.2006 |
| WO2009011523A1 | 22.01.2009 | US2009022135A1 | 22.01.2009 |
| | | AU2008276824A1 | 22.01.2009 |
| | | CA2692521A1 | 22.01.2009 |
| | | EP2176965A1 | 21.04.2010 |
| | | KR20100041694A | 22.04.2010 |
| | | CN101755399A | 23.06.2010 |
| | | JP2010528557T | 19.08.2010 |
| CN101682482A | 24.03.2010 | WO2008157636A2 | 24.12.2008 |
| | | US2009073955A1 | 19.03.2009 |
| | | WO2008157636A3 | 30.04.2009 |
| | | TW200910806A | 01.03.2009 |
| | | AU2008265722A1 | 24.12.2008 |
| | | KR20100021526A | 24.02.2010 |
| | | CA2687872A1 | 24.12.2008 |
| | | EP2163022A2 | 17.03.2010 |
| | | MXPA09013867A | 28.02.2010 |
| | | INCHENP200906913E | 18.06.2010 |
| | | MX2009013867A | 03.02.2010 |
| | | JP2010530724T | 09.09.2010 |

Form PCT/ISA /210 (patent family annex) (July 2009)